# EUROPEAN PATENT APPLICATION

(11) **EP 4 729 183 A1**
(43) Date of publication of application: **22.04.2026**
(21) Application number: 25199595.7
(22) Date of filing: 02.09.2025
(51) Int. Cl.: B05B 12/08, B05D 3/04, H01M 10/04

(54) **METHOD AND APPARATUS FOR INSPECTING COATING STATUS OF PUNCHING OIL USING VISION**

(30) Priority: 16.10.2024 KR 20240141619
(71) Applicant: SAMSUNG SDI CO., LTD., Yongin-si, Gyeonggi-do 17084 (KR)
(72) Inventor: MA, Wanjun, 17084 Yongin-Si (KR); BAE, Tae-Hwan, 17084 Yongin-Si (KR)
(74) Representative: Marks & Clerk LLP

(57) **Abstract**

An apparatus for inspecting a coating status of punching oil includes a first sprayer, a first inspector, and a second sprayer, and a control unit. The first sprayer sprays punching oil onto an electrode plate according to a first spray direction and a first spray amount setting value, the first inspector acquires a first image of the electrode plate by using a first camera, the control unit determines whether or not an uncoated area of the electrode plate is present based on the first image, and when the uncoated area is determined to present on the electrode plate, the control unit sets a second spray direction and a second spray amount setting value to be applied by the second sprayer, and the second sprayer sprays punching oil onto the electrode plate according to the second spray direction and the second spray amount setting value.

## Description

### BACKGROUND

### 1. Field

Aspects of embodiments of the present disclosure relate to a method and apparatus for inspecting a coating status of punching oil using vision.

### 2. Description Discussion of the Related Art

Secondary batteries are batteries that are designed to be recharged and discharged, different from primary batteries that are not designed to be recharged. Low-capacity rechargeable batteries are used in small, portable electronic devices, such as smart phones, feature phones, notebook computers, digital cameras, and camcorders, while large-capacity rechargeable batteries are widely used as power sources for driving motors of hybrid vehicles or electric vehicles and are used for power storage (e.g., home or utility scale power storage). A secondary battery generally includes an electrode assembly including (or consisting of) a positive electrode and a negative electrode, a case accommodating the electrode assembly, a terminal part connected to the electrode assembly, etc.

In the process of manufacturing a secondary battery, a notching process is a process of cutting an electrode plate into a desired shape. The notching process may be classified as a mold notching method or a laser notching method.

Typically, in the process of punching a mold, an electrode plate notching area is coated with punching oil to reduce friction and reduce wear of the mold. When the mold is notched, scrap is generated, and in the case of a positive electrode mold, when the scraps are not properly discharged, aluminum adheres to the electrode plate. To prevent such adhesion, in the positive electrode notching process, an uncoated portion of a positive electrode plate is coated with punching oil by using a spray method.

However, when a cell is manufactured by using the corresponding electrode plate in a state in which the punching oil with which the electrode plate is coated is not completely dried after the mold notching process, lithium precipitates, and when lithium precipitates, the lifetime of the cell is reduced and self-discharge occurs.

The above information disclosed in this Background section is for enhancement of understanding of the background of the present disclosure, and therefore, it may contain information that does not constitute a related (or prior) art.

### SUMMARY

Aspects, features, and embodiments of the present disclosure may be applied to the notching process according to the mold notching method. For example, the notching process according to the mold notching method of embodiments of the present disclosure may be applied to a process of punching a mold by using a press machine to process a tab shape of an electrode plate.

According to one or more embodiments of the present disclosure, an apparatus for automatically inspecting whether or not punching oil is applied and dried and additionally coating an electrode plate with the punching oil or drying the punching oil based on the result of the inspection is provided. Because the punching oil is transparent, it is difficult to inspect whether or not the punching oil is applied without an additive. For example, when using a visual inspection using visible light illumination or an inspection using a visible light camera, it is very difficult to detect whether or not punching oil is applied.

One or more embodiments of the present disclosure provide a method and apparatus for inspecting whether or not punching oil is applied and dried based on an image of an infrared camera assuming that a fluorescent substance is added to the punching oil during a notching process of an electrode plate of a secondary battery by using a mold.

Aspects and features of the present disclosure are not limited to the above-described aspects and features, and other aspects and features that are not mentioned will be clearly understood by those skilled in the art from the following description.

According to an embodiment of the present disclosure, an apparatus for inspecting a coating status of punching oil includes a punching oil coating unit including a first sprayer, a first inspector, and a second sprayer, and a control unit configured to control the first sprayer and the second sprayer.

The first sprayer is configured to spray punching oil onto an electrode plate according to a first spray direction and a first spray amount setting value, which are set by the control unit, the first inspector is configured to acquire a first image of the electrode plate by using a first camera, the control unit is configured to determine whether or not an uncoated area of the electrode plate is present based on the first image, when the uncoated area is determined to be present on the electrode plate, the control unit is configured to set a second spray direction and a second spray amount setting value to be applied by the second sprayer, and the second sprayer is configured to spray punching oil onto the electrode plate according to the second spray direction and the second spray amount setting value.

The apparatus may further include a punching oil drying unit. The punching oil drying unit may include a first dryer. The punching oil drying unit may include a second inspector. The punching oil drying unit may include a second dryer.

The first dryer may be configured to spray air onto the electrode plate according to a first air blowing direction and a first air blowing amount setting value, which are set by the control unit, to dry the electrode plate. The second inspector may be configured to acquire a second image of the electrode plate by using a second camera. The control unit may be configured to determine whether or not an undried area of the electrode plate is present based on the second image. When the undried area is determined to be present on the electrode plate, the control unit may be configured to set a second air blowing direction and a second air blowing amount setting value to be applied by the second dryer. The second dryer may be configured to spray air onto the electrode plate according to the second air blowing direction and the second air blowing amount setting value to dry the electrode plate.

According to another embodiment of the present disclosure, a method of inspecting a coating status of punching oil includes spraying, by a first sprayer, punching oil onto an electrode plate according to a first spray direction and first spray amount setting value, acquiring, by a first inspector, a first image of the electrode plate by using a first camera, determining, by a control unit, whether or not an uncoated area is present on the electrode plate based on the first image, and when the uncoated area is determined to be present on the electrode plate, spraying, by a second sprayer, punching oil onto the electrode plate according to a second spray direction and second spray amount setting value.

The method may further include spraying, by a first dryer, air onto the electrode plate according to a first air blowing direction and first air blowing amount setting value to dry the electrode plate. The method may further include acquiring, by a second inspector, a second image of the electrode plate by using a second camera. The method may further include determining, by the control unit, whether or not an undried area is present on the electrode plate based on the second image. The method may further include, when the undried area is determined to be present on the electrode plate, spraying, by a second dryer, air onto the electrode plate according to a second air blowing direction and second air blowing amount setting value to dry the electrode plate.

In an embodiment of the present disclosure, the first camera may be an ultraviolet (UV) camera.

In an embodiment of the present disclosure, the second camera may be a UV camera.

In an embodiment of the present disclosure, the first inspector may include a first UV illumination device and the first camera. The first UV illumination device and the first camera may be in a darkroom. The first UV illumination device may be configured to project UV illumination onto the electrode plate. The first camera may be configured to generate the first image by using reflected light of the electrode plate.

In an embodiment of the present disclosure, the second inspector may include a second UV illumination device and the second camera. The second UV illumination device and the second camera may be in a darkroom. The second UV illumination device may be configured to project UV illumination onto the electrode plate. The second camera may be configured to generate the second image by using reflected light of the electrode plate.

The punching oil sprayed by each of the first sprayer and the second sprayer may include a fluorescent material. The fluorescent material may be a fluorescent material capable of reflecting UV illumination.

Aspects and features of the present disclosure are not limited to those described above, and other aspects and features not specifically mentioned herein will be clearly understood by those skilled in the art from the description of the present disclosure below.

At least some of the above and other features of the invention are set out in the claims.

### BRIEF DESCRIPTION OF THE DRAWINGS

The above and other aspects and features of the present disclosure will become more apparent to those of ordinary skill in the art by describing embodiments thereof, in detail, with reference to the accompanying drawings, in which:
FIG. 1 is a view illustrating a part of a conventional stack process;
FIG. 2 is a view illustrating a mold notching process included in the conventional stack process;
FIG. 3 is a view illustrating a punching oil coating inspection test using an image sensor;
FIG. 4 is a view illustrating a part of a stack process to which an apparatus for inspecting a coating status of punching oil according to an embodiment of the present disclosure is applied;
FIG. 5 is a block diagram describing a configuration of an apparatus for inspecting a coating status of punching oil according to an embodiment of the present disclosure; and
FIG. 6 is a flowchart describing a method of inspecting a coating status of punching oil according to an embodiment of the present disclosure.

### DETAILED DESCRIPTION

Hereinafter, embodiments of the present disclosure will be described, in detail, with reference to the accompanying drawings. The terms or words used in the present specification and claims should not be narrowly interpreted according to their general or dictionary meanings but should be interpreted as having meanings and concepts that are consistent with the technical idea of the present disclosure on the basis of the principle that an inventor can be his/her own lexicographer to appropriately define concepts of terms to describe his/her invention in the best way. The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

In the figures, dimensions of the various elements, layers, etc. may be exaggerated for clarity of illustration. In addition, the same reference numbers may denote the same components in different embodiments.

References to two compared elements, features, etc. as being "the same" may mean that they are "substantially the same." Thus, the phrase "substantially the same" may include a case having a deviation that is considered low in the art, for example, a deviation of about 5% or less. In addition, if a certain parameter is referred to as being uniform in a given region, it may mean that it is uniform in terms of an average thereof.

It will be understood that, although the terms first, second, etc. may be used herein to describe various elements, components, regions, layers, and/or sections, these elements, components, regions, layers, and/or sections should not be limited by these terms. These terms are used only to distinguish one component from another, and unless otherwise stated, it is apparent that a first component may be a second component.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

It will be understood that if an element or layer is referred to as being "on," "connected to," or "coupled to" another element or layer, it may be directly on, connected, or coupled to the other element or layer or one or more intervening elements or layers may also be present.

As used herein, the term "and/or" includes any and all combinations of one or more of the associated items listed. Further, the use of "may" if describing embodiments of the present disclosure relates to "one or more embodiments of the present disclosure." Expressions, such as "at least one of" and "any one of," before a list of elements, modify the entire list of elements and do not modify the individual elements of the list.

Throughout the specification, if "A and/or B" is stated, it means A, B or A and B, unless otherwise stated, and when "C to D" is stated, it means C or more and D or less, unless otherwise specified.

When phrases such as "at least one of A, B and C", "at least one of A, B or C," "at least one selected from a group of A, B and C," or "at least one selected from among A, B and C" are used to designate a list of elements A, B and C, the phrase may refer to any and all suitable combinations.

The terms "use" may be considered synonymous with the terms "utilize." As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientations depicted in the figures. For example, if the device in the figures is turned over, elements described as "below" or "beneath" other elements or features would then be oriented "above" or "over" the other elements or features. Thus, the term "below" may encompass both an orientation of above and below.

The terminology used herein is for the purpose of describing embodiments of the present disclosure and is not intended to be limiting of the present disclosure.

Hereinafter, embodiments of the present disclosure will be described in detail with reference to the accompanying drawings.

In a process of manufacturing a secondary battery, a stack process is a process of stacking a positive electrode material, a negative electrode material, an electrolyte, and a separator. The stack process is performed in the order of unwinding an electrode plate, applying punching oil, notching, drying the punching oil, cutting, aligning, stacking, unloading a jellyroll, bonding, and taping.

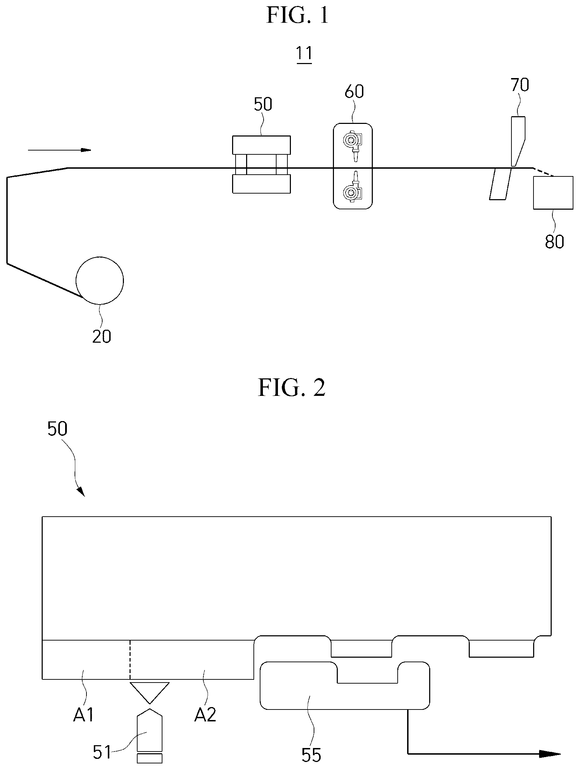

FIG. 1 is a view illustrating a part of a conventional stack process and illustrates processes from the unwinding process to the cutting process. An unwinder 20 unwinds wound electrode plates, and in a notching process 50, punching oil is sprayed on a notching area of an electrode plate and a tab shape is formed through notching. A dryer 60 dries the punching oil with which the electrode plate is coated. The dryer 60 may include an air blower. An electrode plate that has passed through the dryer 60 is transported to a cutter 70 and partitioned into sheets (e.g., into sheet units). Thereafter, electrode plates partitioned into sheet units are transported to an aligning process, which is a subsequent process, by an out-feeder.

FIG. 2 is a view illustrating a mold notching process included in the conventional stack process. FIG. 2 is a view illustrating the notching process 50 in more detail. The conventional stack process includes a punching oil sprayer 51. In the notching process 50, an electrode plate A1 passes through the punching oil sprayer 51 to become an electrode plate A2 having a notching area that is coated with punching oil, and a tab shape is formed through notching. A scrap 55 cut from the electrode plate A2 by the notching is discharged to the outside.

That is, in the conventional stack process, the punching oil sprayer 51 for applying punching oil is disposed before notching, and the dryer 60 for drying the punching oil is disposed after the notching process 50.

However, in the conventional stack process, an apparatus for inspecting whether or not the notching area of the electrode plate is coated with punching oil is not disposed in the notching process 50 or before or after the notching process 50. When an uncoated portion of the electrode plate on which a tab is formed is not properly coated with punching oil, the lifetime of a mold is shortened and/or a defective product occurs, and thus, an apparatus for inspecting punching oil, which includes lighting and a camera, may be included.

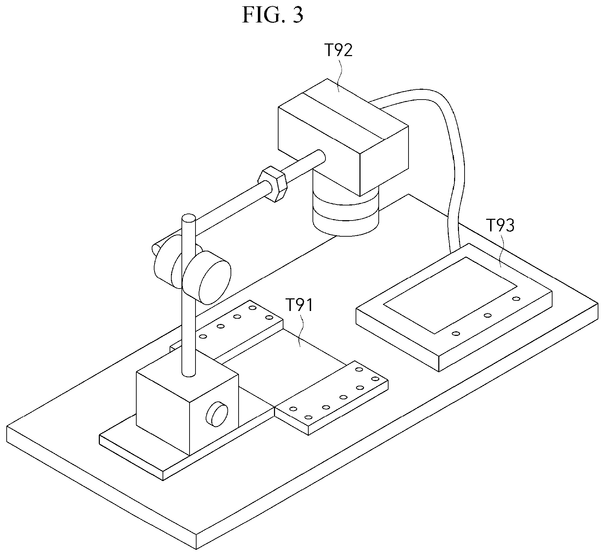

FIG. 3 is a view illustrating a punching oil coating inspection test using an image sensor.

A test device shown in FIG. 3 is a device including an image sensor (e.g., a camera) T92 is installed on (e.g., over) an electrode plate T91, which is an inspection target, to acquire an image of the electrode plate T91 and which generates the result of the inspection based on the image. The result of the inspection is displayed through a display panel T93.

However, this test device cannot be applied to (e.g., cannot produce accurate inspection results) on a glossy portion of the electrode plate because an area of the electrode plate that is coated with punching oil is not accurately detected due to irregular reflection.

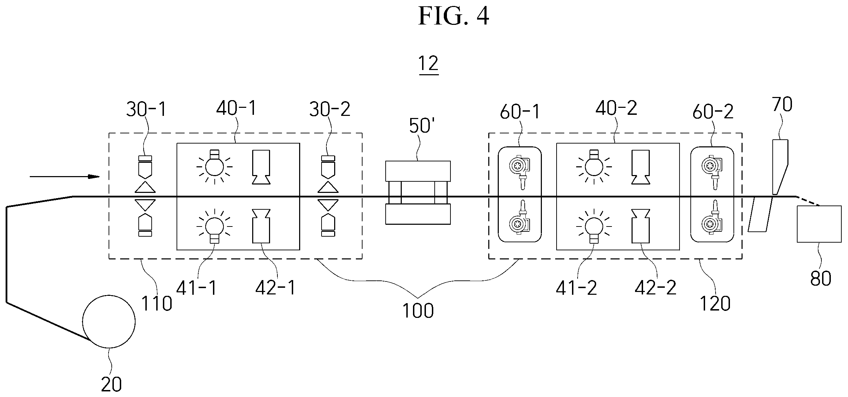

FIG. 4 is a view illustrating a part of a stack process to which an apparatus for inspecting a coating status of punching oil according to an embodiment of the present disclosure is applied.

The stack process shown in FIG. 4 is a process of arranging a punching oil coating unit 110 before a notching process 50' and arranging a punching oil drying unit 120 after the notching process 50'. In the conventional stack process shown in FIGS. 1 and 2, the notching process 50 includes the punching oil sprayer 51, but in the stack process shown in FIG. 4, according to an embodiment of the present disclosure, the punching oil coating unit 110 includes a first sprayer 30-1 and a second sprayer 30-2 for spraying punching oil and a first inspector 40-1 for inspecting a punching oil coating state positioned between the first sprayer 30-1 and the second sprayer 30-2. In addition, in the stack process shown in FIG. 4, according to an embodiment of the present disclosure, the punching oil drying unit 120 includes a first dryer 60-1 and a second dryer 60-2 for drying punching oil and a second inspector 40-2 for inspecting a drying state of the punching oil positioned between the first dryer 60-1 and the second dryer 60-2.

Accordingly, in the stack process shown in FIG. 4, according to an embodiment of the present disclosure, the process from unwinding to cutting is performed in the order of unwinding, applying punching oil, inspecting the punching oil, applying additional punching oil, notching, drying the punching oil, inspecting the punching oil, additionally drying punching oil, and cutting.

As described above, the punching oil coating unit 110 includes the first sprayer 30-1, the first inspector 40-1, and the second sprayer 30-2. The first sprayer 30-1 is configured to spray punching oil on the notching area of the electrode plate, and the first inspector 40-1 is configured to detect an uncoated punching oil area of the notching area of the electrode plate. The second sprayer 30-2 is configured to spray punching oil on the corresponding uncoated area when the uncoated punching oil area is detected (e.g., when the punching oil area of the notching area is detected or determined to not be coated in punching oil). The first inspector 40-1 includes a first ultraviolet (UV) illumination device 41-1 and a first UV camera 42-1 arranged in a darkroom. The darkroom is designed to improve or maximize the effect of UV illumination. The first sprayer 30-1 and the second sprayer 30-2 may be devices for spraying punching oil onto an electrode plate in a spray manner according to a set direction and amount of spray.

As described above, the punching oil drying unit 120 includes the first dryer 60-1, the second inspector 40-2, and the second dryer 60-2. The first dryer 60-1 is configured to dry the punching oil with which the notching area of the electrode plate is coated, and the second inspector 40-2 is configured to detect an undried punching oil area. The second dryer 60-2 dries the undried punching oil area. Similar to the first inspector 40-1, the second inspector 40-2 includes a second UV illumination device 41-2 and a second UV camera 42-2 arranged in a darkroom. Similar to the first inspector 40-1, the darkroom of the second inspector 40-2 is also designed to improve or maximize the effect of UV illumination. The first dryer 60-1 and the second dryer 60-2 may include an air blower for blowing air onto the electrode plate according to a set direction and amount of airflow.

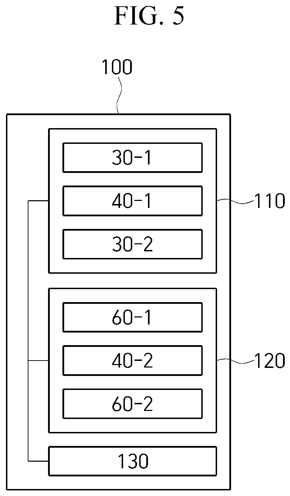

FIG. 5 is a block diagram describing a configuration of the apparatus for inspecting a coating status of punching oil according to an embodiment of the present disclosure.

Referring to FIG. 5, an apparatus 100 for inspecting a coating status of punching oil, according to an embodiment of the present disclosure, includes the punching oil coating unit 110, the punching oil drying unit 120, and a control unit (e.g., a controller) 130. The control unit 130 may include at least one processor. The control unit 130 and/or any other relevant devices or components according to embodiments of the present disclosure described herein may be implemented utilizing any suitable hardware, firmware (e.g., an application-specific integrated circuit), software, and/or a suitable combination of software, firmware, and hardware. For example, the various components of the control unit 130 may be formed on one integrated circuit (IC) chip or on separate IC chips. Further, the various components of the control unit 130 may be implemented on a flexible printed circuit film, a tape carrier package (TCP), a printed circuit board (PCB), or formed on a same substrate as the control unit 130. Further, the various components of the control unit 130 may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device or the functionality of a particular computing device may be distributed across one or more other computing devices without departing from the scope of the example embodiments of the present disclosure.

Because a specific configuration of the punching oil drying unit 120 of the punching oil coating unit 110 is described above with reference to FIG. 4, a repeated description thereof will be omitted.

The apparatus 100 for inspecting a coating status of punching oil according to an embodiment is illustrated in FIG. 5, but components of the apparatus 100 for inspecting a coating status of punching oil are not limited to the embodiment illustrated in FIG. 5 and components may be added, changed, and/or omitted.

The control unit 130 may control the punching oil coating unit 110 and the punching oil drying unit 120 and/or may collect information from the punching oil coating unit 110 and the punching oil drying unit 120.

For example, the control unit 130 may control the first sprayer 30-1 and the second sprayer 30-2, which are included in the punching oil coating unit 110, and the first dryer 60-1 and the second dryer 60-2, which are included in the punching oil drying unit 120.

The first sprayer 30-1 sprays punching oil onto the electrode plate according to a first spray direction and a first spray amount setting value, which are set by the control unit 130.

The first inspector 40-1 acquires a first image of the electrode plate by using the first UV illumination device 41-1 and the first UV camera 42-1. The first inspector 40-1 includes the first UV illumination device 41-1 and the first UV camera 42-1 arranged in a darkroom. The first UV illumination device 41-1 projects UV illumination onto the electrode plate, and the first UV camera 42-1 generates the first image by using reflected light of the electrode plate.

The control unit 130 determines whether or not an uncoated area of the electrode plate is present based on the first image, and when the uncoated area is determined to be present on the electrode plate, the control unit 130 sets a second spray direction and a second spray amount setting value to be applied by the second sprayer 30-2.

The second sprayer 30-2 sprays punching oil onto the electrode plate according to the second spray direction and the second spray amount setting value, which are set by the control unit 130.

The punching oil sprayed by the first sprayer 30-1 and the second sprayer 30-2 may include a fluorescent material capable of reflecting UV illumination (e.g., a UV-reflective fluorescent material).

The first dryer 60-1 sprays air onto the electrode plate according to a first air blowing direction and a first air blowing amount setting value, which are set by the control unit 130 to dry the electrode plate.

The second inspector 40-2 acquires a second image of the electrode plate using the second UV illumination device 41-2 and the second UV camera 42-2. The second inspector 40-2 includes the second UV illumination device 41-2 and the second UV camera 42-2 arranged in a darkroom. The second UV illumination device 41-2 projects UV illumination onto the electrode plate, and the second UV camera 42-2 generates the second image by using reflected light of the electrode plate.

The control unit 130 determines whether or not an undried area of the electrode plate is present based on the second image, and when the undried area is determined to be present on the electrode plate, the control unit 130 sets a second air blowing direction and a second air blowing amount setting value to be applied by the second dryer 60-2.

The second dryer 60-2 sprays air onto the electrode plate according to the second air blowing direction and the second air blowing amount setting value to dry the electrode plate.

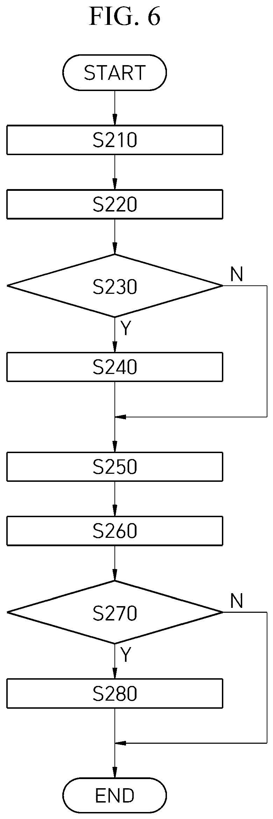

FIG. 6 is a flowchart describing a method of inspecting a coating status of punching oil according to an embodiment of the present disclosure.

The method of inspecting a coating status of punching oil described in FIG. 6 may be applied to the stack process illustrated in FIG. 4 and may be performed by the apparatus 100 for inspecting a coating status of punching oil. For convenience of description, the following description will be provided assuming that the method of inspecting a coating status of punching oil described in FIG. 6 is performed by the apparatus 100 for inspecting a coating status of punching oil as described in FIG. 5.

The punching oil used in the method of inspecting a coating status of punching oil of FIG. 6 includes a fluorescent material capable of reflecting UV illumination.

Referring to FIG. 6, the method of inspecting a coating status of punching oil, according to an embodiment of the present disclosure, includes operations S210 to S280. The method of inspecting a coating status of punching oil according to an embodiment is illustrated in FIG. 6, but operations of the method of inspecting a coating status of punching oil are not limited to the embodiment illustrated in FIG. 6 and may be added, changed, and/or omitted.

### Operation S210 - first coating operation

The control unit 130 sets a punching oil spray direction (e.g., a first spray direction) and punching oil spray amount (e.g., a first spray amount setting value) to be applied by the first sprayer 30-1. When the first sprayer 30-1 has a plurality of nozzles, the first spray direction and the first spray amount setting value may have a plurality of directions and a plurality of values, respectively. The first spray direction may be set based on a notching target area of the electrode plate, and the first spray amount setting value may be set by a user or in a pre-stored reference table.

The first sprayer 30-1 sprays punching oil onto the electrode plate according to the first spray direction and the first spray amount setting value, which are set by the control unit 130, and transmits a spray amount (e.g., a first measured spray amount value) measured by a mounted flowmeter to the control unit 130.

### Operation S220 - first inspecting operation

The first inspector 40-1 imparts (e.g., emits) UV illumination to the electrode plate by using the first UV illumination device 41-1 and acquires an image (e.g., a first image) of the electrode plate by using the first UV camera 42-1. The first inspector 40-1 transmits the acquired image (e.g., the first image) of the electrode plate to the control unit 130.

### Operation S230 - determining whether or not an area not coated with punching oil (e.g., an uncoated area) is present on the electrode plate

The control unit 130 determines whether or not an uncoated area is present in the notching target area of the electrode plate based on the first image. For example, because the first image is an image generated based on reflected UV light, the control unit 130 may determine that a part indicated in black (e.g., an area appearing as black in the first image) is an uncoated area. In addition, the control unit 130 may quickly detect the uncoated area by applying a deep learning technique.

The apparatus 100 for inspecting a coating status of punching oil performs operation S240 when the uncoated area is determined to be present on the electrode plate, and if the uncoated area is determined to not be present on the electrode plate, performs operation S250 without performing operation S240. When operation S240 is not performed, the punching oil is not sprayed by the second sprayer 30-2.

### Operation S240 - second coating operation

When the uncoated area is determined to be present on the electrode plate, the control unit 130 sets a punching oil spray direction (e.g., a second spray direction) and punching oil spray amount (e.g., a second spray amount setting value) of punching oil to be applied to (e.g., applied by) the second sprayer 30-2 based on the notching target area and a position and size of the uncoated area of the electrode plate. When the second sprayer 30-2 has a plurality of nozzles, the second spray direction and the second spray amount setting value may have a plurality of directions and a plurality of values, respectively.

In addition, the control unit 130 may correct the first spray direction and the first spray amount setting value based on the position and size of the uncoated area of the electrode plate. For example, when the size of the uncoated area is greater than a threshold value, the control unit 130 may perform correction to slightly move the first spray direction to the position of the uncoated area or correction to increase the first spray amount setting value.

The second sprayer 30-2 sprays punching oil onto the electrode plate according to the second spray direction and the second spray amount setting value, which are set by the control unit 130 and transmits a spray amount (e.g., a second measured spray amount value) measured by the mounted flowmeter to the control unit 130.

### Operation S250 - first drying operation

The control unit 130 sets the air blowing direction (e.g., a first air blowing direction) and the air blowing amount (e.g., a first air blowing amount setting value) of the first dryer 60-1 based on the first spray direction, the first measured spray amount value, the second spray direction, and the second measured spray amount value. When an air blower included in the first dryer 60-1 are provided as a plurality of air blowers, the first air blowing direction and the first air blowing amount setting value may be provided as a plurality of directions and a plurality of values, respectively.

The first dryer 60-1 sprays air onto the electrode plate according to the first air blowing direction and the first air blowing amount setting value, which are set by the control unit 130 to dry the electrode plate.

### Operation S260 - second inspecting operation

The second inspector 40-2 imparts (e.g., emits) UV illumination to the electrode plate by using the second UV illumination device 41-2 and acquires an image (e.g., a second image) of the electrode plate by using the second UV camera 42-2. The second inspector 40-2 transmits the acquired image (e.g., the second image) of the electrode plate to the control unit 130.

### Operation S270 - determining whether or not an area in which punching oil is not dried (e.g., an undried area) is present on the electrode plate

The control unit 130 determines whether or not the undried area is present on the electrode plate based on the second image. The control unit 130 may determine whether or not the undried area is present on the electrode plate or a position and size of the undried area based on a surface texture and color, which are illustrated in the second image, reflectivity estimated from the second image of the electrode plate, or the like. In addition, the control unit 130 may quickly detect the undried area by applying a deep learning technique. In such an embodiment, the control unit 130 may input the surface texture, color, and reflectivity of each zone of the second image into a deep learning model and detect the undried area.

The apparatus 100 for inspecting a coating status of punching oil performs operation S280 when the undried area is determined to be present on the electrode plate, and if the undried area is determined to not be present on the electrode plate, performs subsequent processes after the cutting process without performing operation S280. When operation S280 is not performed, the electrode plate is not additionally dried by the second dryer 60-2.

The control unit 130 may additionally determine whether or not the uncoated area is present on the electrode plate based on the second image. When it is determined that the uncoated area is present, the control unit 130 may perform all or some of the operations of the control unit 130 described in operation S240.

### Operation S280 - second drying operation

When the undried area is present on the electrode plate, the control unit 130 sets an air blowing direction (e.g., a second air blowing direction) and air blowing amount (e.g., a second air blowing amount setting value) to be applied to (e.g., applied by) the second dryer 60-2 based on a position and size of the undried area of the electrode plate. When an air blower included in the second dryer 60-2 is provided as a plurality of air blowers, the second air blowing direction and the second air blowing amount setting value may be provided as a plurality of directions and a plurality of values, respectively.

The control unit 130 may calculate a natural drying time based on a conveyance length (e.g., a distance) and conveyance speed from the second inspector 40-2 to the second dryer 60-2 and may correct the second air blowing direction and the second air blowing amount setting value. For example, when the conveyance speed decreases, the natural drying time increases, and thus, the control unit 130 may perform correction to decrease the second air blowing amount setting value.

In addition, the control unit 130 may correct the first air blowing direction and the first air blowing amount setting value based on the position and size of the undried area of the electrode plate. For example, when the size of the undried area is greater than the threshold value, the control unit 130 may perform correction to increase the first air blowing amount setting value or slightly move the first air blowing direction to the position of the undried area.

In addition, the control unit 130 may correct the first spray amount setting value, the first spray direction, the second spray amount setting value, and the second spray direction based on the position and size of the undried area of the electrode plate. For example, when the size of the undried area is greater than the threshold value, the control unit 130 may decrease the first spray amount setting value and/or the second spray amount setting value within an allowable range.

The second dryer 60-2 sprays air onto the electrode plate according to the second air blowing direction and the second air blowing amount setting value, which are set by the control unit 130 to additionally dry the electrode plate.

The above method of inspecting a coating status of punching oil has been described with reference to the flowcharts presented in the drawings. For simplicity, the method has been illustrated and described as a series of blocks, but the present disclosure is not limited to the order of the blocks as illustrated, some blocks may occur in a different order or concurrently (or simultaneously) with other blocks illustrated and described herein, and various other branches, flow paths, and block orders that achieve the same or similar results may be implemented. In addition, not all of the shown blocks are required for implementing the method described herein.

In the description with reference to FIG. 6, each operation may be further subdivided into a larger number of additional operations or combined into fewer operations according to embodiments of the present disclosure. In addition, some operations may be omitted, or the order between the operations may be changed. In addition, even if some content is omitted, the content of FIGS. 4 and 5 may be applied to the content of FIG. 6. In addition, the content of FIG. 6 may be applied to the content of FIGS. 4 to 5.

According to embodiments of the present disclosure, it is possible to determine whether or not an uncoated portion of an electrode plate is coated with punching oil and to additionally perform coating on an uncoated area with the punching oil.

In addition, according to embodiments of the present disclosure, it is possible to prevent notching from being performed on a portion of the electrode plate that is not coated with punching oil, thereby increasing the lifetime of a mold.

In addition, according to embodiments of the present disclosure, it is possible to prevent a cell from being manufactured in a state in which punching oil is not dried, thereby increasing the lifetime of the cell and preventing self-discharge from occurring.

Aspects and feature of the present disclosure are not limited to those described above, and other aspects and features that are not specifically mentioned herein will be clearly understood by those skilled in the art from the description of the present disclosure below.

Although the present disclosure has been described above with respect to embodiments thereof, the present disclosure is not limited thereto. Various modifications and variations can be made thereto by those skilled in the art within the scope of the present disclosure as defined by the appended claims and their equivalents.

## Claims

1. An apparatus for inspecting a coating status of punching oil, the apparatus comprising:
a punching oil coating unit comprising a first sprayer, a first inspector, and a second sprayer; and
a control unit configured to control the first sprayer and the second sprayer,
wherein the first sprayer is configured to spray punching oil onto an electrode plate according to a first spray direction and a first spray amount setting value, which are set by the control unit,
wherein the first inspector is configured to acquire a first image of the electrode plate by using a first camera,
wherein the control unit is configured to determine whether or not an uncoated area of the electrode plate is present based on the first image, and when the uncoated area is determined to be present on the electrode plate, the control unit is configured to set a second spray direction and a second spray amount setting value to be applied by the second sprayer, and
wherein the second sprayer is configured to spray punching oil onto the electrode plate according to the second spray direction and the second spray amount setting value.

2. The apparatus as claimed in claim 1, wherein the first camera is an ultraviolet (UV) camera.

3. The apparatus as claimed in claim 2, wherein the first inspector comprises a first UV illumination device and the first camera,
wherein the first UV illumination device and the first camera are in a darkroom,
wherein the first UV illumination device is configured to project UV illumination onto the electrode plate, and
wherein the first camera is configured to generate the first image by using reflected light of the electrode plate.

4. The apparatus as claimed in any preceding claim, further comprising a punching oil drying unit comprising a first dryer, a second inspector, and a second dryer,
wherein the first dryer is configured to spray air onto the electrode plate according to a first air blowing direction and a first air blowing amount setting value, which are set by the control unit, to dry the electrode plate,
wherein the second inspector is configured to acquire a second image of the electrode plate by using a second camera,
wherein the control unit is configured to determine whether or not an undried area of the electrode plate is present based on the second image, and when the undried area is determined to be present on the electrode plate, the control unit is configured to set a second air blowing direction and a second air blowing amount setting value to be applied by the second dryer, and
wherein the second dryer is configured to spray air onto the electrode plate according to the second air blowing direction and the second air blowing amount setting value to dry the electrode plate.

5. The apparatus as claimed in claim 4, wherein the second camera is an ultraviolet (UV) camera.

6. The apparatus as claimed in claim 5, wherein the second inspector comprises a second UV illumination device and the second camera,
wherein the second UV illumination device and the second camera are in a darkroom,
wherein the second UV illumination device is configured to project UV illumination onto the electrode plate, and
wherein the second camera is configured to generate the second image by using reflected light of the electrode plate.

7. The apparatus as claimed in any preceding claim, wherein the punching oil sprayed by each of the first sprayer and the second sprayer comprises a fluorescent material.

8. A method of inspecting a coating status of punching oil, the method comprising:
spraying, by a first sprayer, punching oil onto an electrode plate according to a first spray direction and first spray amount setting value;
acquiring, by a first inspector, a first image of the electrode plate by using a first camera;
determining, by a control unit, whether or not an uncoated area is present on the electrode plate based on the first image; and
when the uncoated area is determined to be present on the electrode plate, spraying, by a second sprayer, punching oil onto the electrode plate according to a second spray direction and second spray amount setting value.

9. The method as claimed in claim 8, wherein the first camera is an ultraviolet (UV) camera.

10. The method as claimed in claim 9, wherein the first inspector comprises a first UV illumination device and the first camera,
wherein the first UV illumination device and the first camera are in a darkroom,
wherein the first UV illumination device is configured to project UV illumination onto the electrode plate, and
wherein the first camera is configured to generate the first image by using reflected light of the electrode plate.

11. The method as claimed in any of claims 8-10, further comprising:
spraying, by a first dryer, air onto the electrode plate according to a first air blowing direction and first air blowing amount setting value to dry the electrode plate;
acquiring, by a second inspector, a second image of the electrode plate by using a second camera;
determining, by the control unit, whether or not an undried area is present on the electrode plate based on the second image; and
when the undried area is determined to be present on the electrode plate, spraying, by a second dryer, air onto the electrode plate according to a second air blowing direction and second air blowing amount setting value to dry the electrode plate.

12. The method as claimed in claim 11, wherein the second camera is an ultraviolet (UV) camera.

13. The method as claimed in claim 12, wherein the second inspector comprises a second UV illumination device and the second camera,
wherein the second UV illumination device and the second camera are in a darkroom,
wherein the second UV illumination device is configured to project UV illumination onto the electrode plate, and
wherein the second camera is configured to generate the second image by using reflected light of the electrode plate.

14. The method as claimed in any of claims 8-13, wherein the punching oil sprayed by each of the first sprayer and the second sprayer comprises a fluorescent material.
